# EUROPÄISCHE PATENTSCHRIFT

(11) **EP 2 609 323 B1**
(45) Veröffentlichungstag und Bekanntmachung des Hinweises auf die Patenterteilung: **22.01.2014**
(21) Anmeldenummer: 11743765.7
(22) Anmeldetag: 03.08.2011
(51) Int. Cl.: F03B 7/00

(54) **WASSERKRAFTMASCHINE**
WATER POWER ENGINE
MACHINE HYDRAULIQUE

(30) Priorität: 24.08.2010 AT 14142010
(43) Veröffentlichungstag der Anmeldung: 03.07.2013
(73) Patentinhaber: Maschinenfabrik KBA-MÖDLING Aktiengesellschaft, 2344 Maria Enzersdorf (AT)
(72) Erfinder: ULM, Dietmar, A-2384 Breitenfurt (AT)
(74) Vertreter: Sonn & Partner Patentanwälte
(86) Internationale Anmeldenummer: PCT/AT2011/000332
(87) Internationale Veröffentlichungsnummer: WO 2012/024705

(56) Entgegenhaltungen:
- WO-A1-2004/109098
- WO-A2-2008/012067
- WO-A2-2008/145991
- AT-A1- 501 575
- AT-B- 404 973

## Beschreibung

Die Erfindung betrifft eine Wasserkraftmaschine mit einem Laufrad, das eine mit Schaufeln verbundene Nabe aufweist, die von die Drehachse des Laufrads bildenden, von gegenüberliegenden Stirnseiten der Nabe abstehenden Wellenmitteln getragen wird, und mit einer elektrischen Motor-Generator-Maschine, die über ein Getriebe mit den Wellenmitteln kuppelbar ist.

Aus der AT 404 973 B und AT 501 575 A1 sind Wasserkraftmaschinen in Form von Staudruckmaschinen bekannt, bei welchen das Laufrad derart in einem Gerinne angebracht wird, dass die Nabe das Wasser im Gerinne aufstauen kann. Somit wird stromaufwärts des Laufrads ein vergleichsweise hoher Oberwasserpegel und stromabwärts ein niedriger Unterwasserpegel erhalten. Durch die an der Nabe angebrachten Schaufeln werden Taschen zum Transport des Wassers gebildet, wobei im Betrieb der Wasserdruck ein Drehmoment um die Drehachse des Laufrads bewirkt. Das Laufrad ist mit einem Generator verbunden, der die mechanische Leistung des Laufrads in eine elektrische Nutzleistung umsetzt. Die Leistungsabnahme kann unmittelbar an der Laufradwelle erfolgen; gemäß der AT 501 575 A1 wird das Drehmoment des Laufrads mittels eines Zahnriemens an einer umfangseitigen Leitscheibe des Laufrads abgenommen. An den Stirnflächen des Laufrads sind starre Rahmenplatten angeordnet, welche Lager für das Laufrad aufweisen.

Aus der DE 10 2009 029 794 A1 ist eine weitere Staudruckmaschine mit einem Wasserrad und einer Welle bekannt, welche in Lagern beidseits des Wasserrades frei drehbar gelagert ist.

Wenn keine Möglichkeit zum Ausgleich von Achs- oder Winkelfehlern vorgesehen ist, stellt eine beidseitige Lagerung des Laufrads der Maschine eine statische Überbestimmung dar. Da die Laufradwelle im Betrieb auftretenden Querkräften in diesem Fall nicht ausweichen kann, treten erhebliche Zwangskräfte auf, welche hauptsächlich von den Lagern aufgenommen werden müssen. Eine Überbelastung der Lager kann jedoch zu Beschädigungen der Lager oder der Laufradwelle führen. Bekannte Wasserkraftmaschinen, die Achs- oder Winkelfehler nicht ausgleichen können, sind daher anfällig für äußere Einflüsse und weisen einen vergleichsweise hohen Verschleiss auf.

In der DE 43 13 905 A1 ist eine Wasserkraftanlage mit einem am Außenumfang mit Schaufeln oder Zellen versehenen Wasserrad beschrieben. Das Wasserrad ist über ein Getriebe bzw. Abtriebswelle mit einem Generator verbunden. Zudem ist das Wasserrad mittels einer Tragvorrichtung einseitig an einer Wand angebracht.

Aus der WO 2008/012067 A2 ist eine andersartige Wasserturbine mit am Außenumfang angebrachten flexiblen Schaufeln bekannt. Die Schaufeln werden hierbei mit einer Wasserströmung beaufschlagt. Am Innenumfang ist ein Läufer fest eingesetzt, welcher gegenüber einem stehenden Anker mit der Drehzahl des Laufrades rotiert. Das Laufrad ist hierbei auf einer feststehenden Achse montiert, welche in Rollenlagern des Laufrades gelagert ist.

WO 2008/145991 A offenbart eine andersartige Turbine für ein Gezeiten-Kraftwerk. Die Turbine weist tangential zur Strömung angeordnete Wände auf, welche über Lamellen miteinander verbunden sind.

Die WO 2004/109098 A1 befasst sich allgemein mit dem Einsatz mobiler Flusskraftwerke.

Demgegenüber besteht die Aufgabe der vorliegenden Erfindung darin, eine Wasserkraftmaschine der eingangs angeführten Art zu schaffen, welche auf konstruktiv einfache Art und Weise Zwangskräfte an den Lagerstellen vermeiden bzw. ausgleichen kann.

Diese Aufgabe wird durch eine Wasserkraftmaschine wie in Anspruch 1 definiert gelöst; vorteilhafte Ausführungsformen und Weiterbildungen sind in den abhängigen Ansprüchen angegeben.

Demnach ist eine Stirnseite der Nabe durch eine verformbare Seitenwand gebildet. Die verformbare, insbesondere membranartig ausgebildete Seitenwand der Nabe erlaubt eine Schrägstellung der mit der verformbaren Seitenwand verbundenen Wellenmittel. Demnach können die Wellenmittel im Betrieb um einen bestimmten Winkel relativ zur Drehachse versetzt bzw. geneigt werden, so dass in die Wellenmittel eingeleitete Querkräfte über eine Durchbiegung der verformbaren Seitenwand quer zu ihrer Längserstreckungsebene ausgeglichen werden. Zudem können an den Wellenmitteln angreifende axiale Kräfte über eine Verformung der Seitenwand abgeleitet werden. Somit werden die Lagerstellen der Wellenmittel geschont. Wenn die Seitenwand elastisch verformbar ist, wird eine sensibel auf eingeleitete Kräfte reagierende Anordnung erzielt; zudem ist sichergestellt, dass die Seitenwand nach einer momentanen Belastungsspitze in ihre Ausgangslage zurückkehrt. Aufgrund der verformbaren Ausbildung der Seitenwand kann das Laufrad im Betrieb taumeln, wobei die auftretenden Zwangskräfte minimiert werden. Somit werden lediglich vergleichsweise schwache Zwangskräfte auf die den Wellenmitteln zugeordneten Lagerstellen übertragen, so dass der Verschleiss der Anlage im Dauerbetrieb erheblich reduziert werden kann. Zudem wird einer Beschädigung der Wellenmittel infolge von plastische Verformungen der Wellenmittel hervorrufenden Belastungen vorgebeugt. Die Wasserkraftmaschine ist somit wesentlich weniger empfindlich gegenüber äußeren Einflüssen und Montage- bzw. Justiertoleranzen.

Um die erforderliche Stabilität der Wasserkraftmaschine im Betrieb zu gewährleisten, ist die der verformbaren Seitenwand gegenüberliegende Stirnseite der Nabe durch eine im Betrieb im Wesentlichen starr angeordnete Seitenwand gebildet. Somit sind an den Stirnseiten der Nabe jeweils eine (elastisch) verformbare und eine starre Seitenwand angeordnet, um eine sensibel auf im Betrieb auftretende Achs- und Winkelversetzungen reagierende Anordnung zu erhalten, ohne die Stabilität der Wasserkraftmaschine insgesamt zu beeinträchtigen.

Zur Erzielung einer konstruktiv einfachen, teilesparenden Ausführung ist es von Vorteil, wenn die verformbare Seitenwand mit einem zur Drehmomenübertragung auf das Getriebe vorgesehenen Wellenstummel verbunden ist, der in einem biegesteifen Getriebeelement, insbesondere einer Hohlwelle des Getriebes, gelagert ist. Der Wellenstummel ist drehfest mit dem insbesondere als Hohlwelle ausgeführten Getriebeelement verbunden, welche in geeigneten Lagermitteln gelagert ist. Das Getriebe weist Übersetzungsmittel, beispielsweise Zahnräder, auf, welche für eine geeignete Übersetzung der vom Wellenelement gelieferten Drehzahl in eine für den Betrieb der Motor-Generator-Maschine zweckmäßige höhere Drehzahl eingerichtet sind. Diese Ausführung hat den Vorteil, dass auf der Getriebeseite ein gesondertes Lager für den Wellenstummel eingespart werden kann. Durch die Integration der Lagermittel in das Getriebe kann eine konstruktiv einfache Bauweise mit vergleichsweise niedrigen Herstellungskosten realisiert werden. Die verformbare Seitenwand der Nabe gewährleistet dabei, dass Zwangskräfte an dem biegesteifen Getriebeelement über elastische Verformungen der Seitenwand abgeschwächt bzw. vermieden werden.

Um eine Schiefstellung der Wellenmittel infolge von im Betrieb auftretenden Kräften an der dem Getriebe gegenüberliegenden Stirnseite der Nabe ausgleichen zu können, ist es günstig, wenn ein mit der starren Seitenwand verbundener Wellenstummel in einem Pendellager gelagert ist.

Um die Starrheit der Seitenwand im Betrieb zu gewährleisten, ist es von Vorteil, wenn die starre Seitenwand mit Versteifungselementen, insbesondere Versteifungswinkeln, verbunden ist. Zur Erhöhung der Steifigkeit der Seitenwand kann alternativ bzw. zusätzlich eine gegenüber der verformbaren Seitenwand erhöhte Wandstärke vorgesehen werden.

Zweckmäßigerweise ist die verformbare Seitenwand durch ein Metallblech, insbesondere ein Stahlblech, gebildet, das vorzugsweise eine Stärke (Dicke) von zwischen 2 mm und 15 mm aufweist. Die Stärke des Stahlblechs richtet sich nach den Dimensionen der Wasserkraftmaschine, wobei für Laufraddurchmesser von mehr als 1 m eine Wandstärke von 6 mm bis 15 mm zweckmäßig ist. Bei kleineren Laufrädern mit einem Durchmesser von 0.5 m bis 1 m haben sich Wandstärken von 2 mm bis 6 mm als vorteilhaft herausgestellt.

Zur Kräfteübertragung zwischen den Wellenmitteln und den Seitenwänden der Nabe ist es günstig, wenn an den Seitenwänden vergleichsweise kleine, d.h. eine geringere Haupterstreckung als die Seitenwände aufweisende, Befestigungsplatten angebracht sind. Die Befestigungsplatten sind mit dem jeweiligen Wellenstummel fest, z.B. durch Formschluss und Verschweißen, verbunden. Die drehfeste Verbindung zwischen den Wellenstummeln und den Befestigungsplatten kann allgemein auf form- bzw. kraftschlüssige Weise erfolgen. Die Befestigungsplatten sind vorzugsweise starr ausgebildet. An der verformbaren Seitenwand sind insbesondere allseitig rund um die starre Befestigungsplatte Biegezonen ausgebildet, welche im Betrieb zum Ausgleich von Versetzungen der Wellenmittel quer zur Längserstreckungsebene der Seitenwand ausbiegbar sind.

Zur Lagerung des Laufrads ist es von Vorteil, wenn das Getriebe mittels einer Adaptereinrichtung an einem das Laufrad umfassenden Lagerrahmen befestigt ist. Die Adaptereinrichtung kann insbesondere an seitlichen Rahmenteilen befestigte Anschraubhülsen aufweisen, welche vorzugsweise mit einer im Betrieb die Generator-Getriebe-Einheit tragenden Adapterleiste verbunden sind. Vorzugsweise weist die Adapterleiste freie Befestigungsstellen auf, welche zur Anpassung an verschiedene Getriebetypen dienen können.

Einer bevorzugten Ausführung der Erfindung zufolge legt das Laufrad zur Ausbildung einer Staudruckmaschine im Betrieb eine Wasserstandshöhe als Differenz zwischen einem Oberwasserpegel und einem Unterwasserpegel fest. Die vorzugsweise über die gesamte Breite eines Gerinnes angeordnete Staudruckmaschine bildet ein Wehr, welches das Gerinne mit der festgelegten Wasserstandshöhe aufstaut.

Die Erfindung wird nachfolgend anhand von in der Zeichnung veranschaulichten, besonders bevorzugten Ausführungsbeispielen, auf die sie jedoch nicht beschränkt sein soll, noch weiter erläutert. Im Einzelnen zeigen in der Zeichnung:
Fig. 1 eine schaubildliche Ansicht eines Laufrads einer als Staudruckmaschine ausgebildeten Wasserkraftmaschine;
Fig. 2a eine schaubildliche Ansicht einer Wasserkraftmaschine mit dem in Fig. 1 dargestellten Laufrad, gesehen von der Unterwasserseite;
Fig. 2b eine schaubildliche Ansicht der Wasserkraftmaschine gemäß Fig. 2a von der Oberwasserseite her, wobei die Anbringung der Motor-Generator-Maschine an einem Lagerrahmen ersichtlich ist;

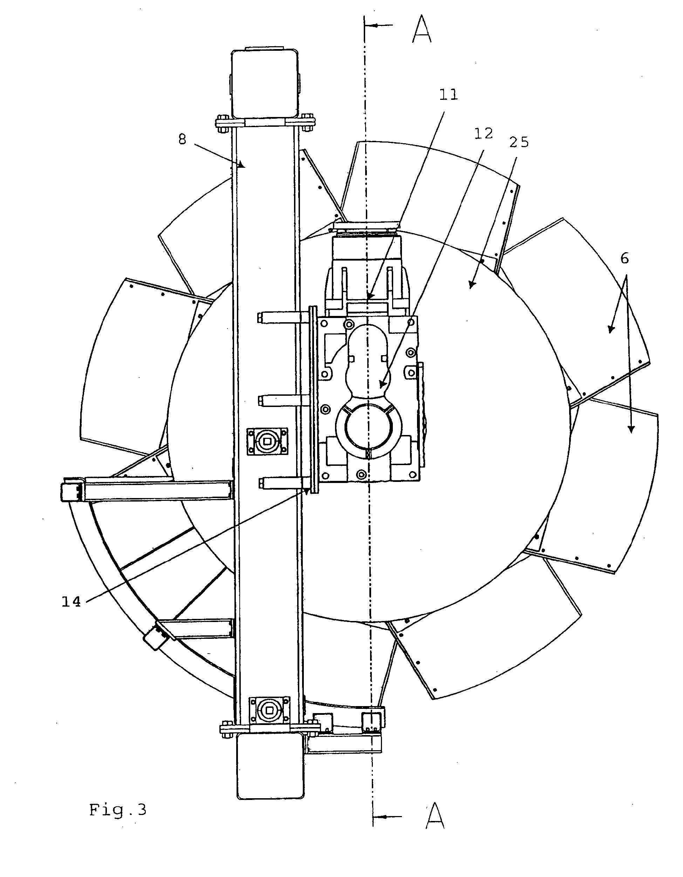

Fig. 3 eine Seitenansicht der in den.Fig. 1 und 2 dargestellten Wasserkraftmaschine;
Fig. 4 eine Schnittansicht der Wasserkraftmaschine entlang der Linie A-A in Fig. 3, aus der die Drehachse des Laufrads definierende Wellenmittel in der Art von Wellenstummeln ersichtlich sind;
Fig. 5 eine Detailansicht des in Fig. 4 mit einem Kreis veranschaulichten Details B, welches die Lagerung eines zur Drehmomentübertragung auf die Motor-Generator-Maschine vorgesehenen Wellenstummels in einer Hohlwelle des Getriebes zeigt;
Fig. 6 eine Detailansicht des in Fig. 4 mit einem Kreis veranschaulichten Details C, das die Lagerung des gegenüberliegenden Wellenstummels in einem Pendellager zeigt; und
Fig. 7 eine Frontansicht der Wasserkraftmaschine, aus der schematisch die Durchbiegung einer mit dem getriebeseitigen Wellenstummel verbundenen verformbaren Seitenwand der Laufrad-Nabe ersichtlich ist.

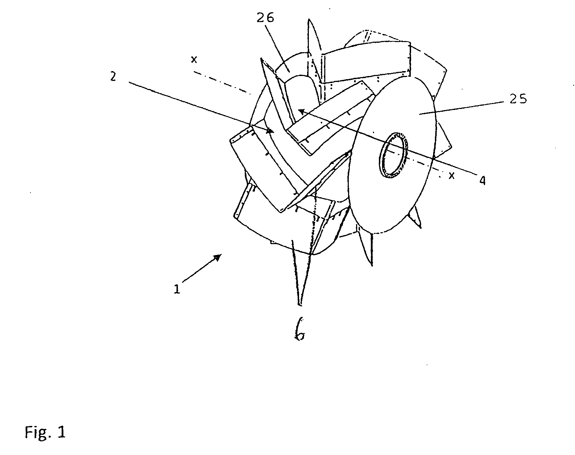

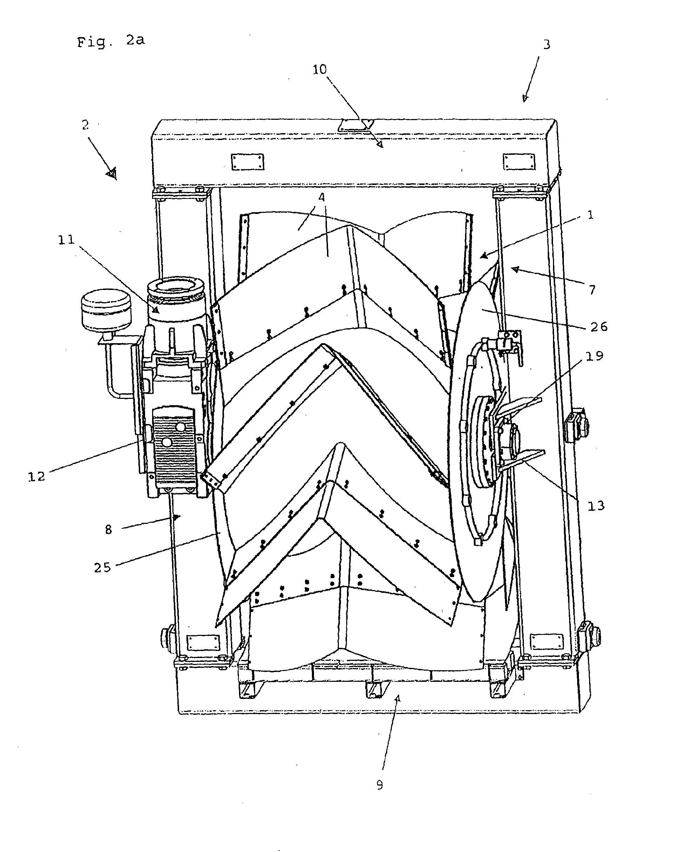

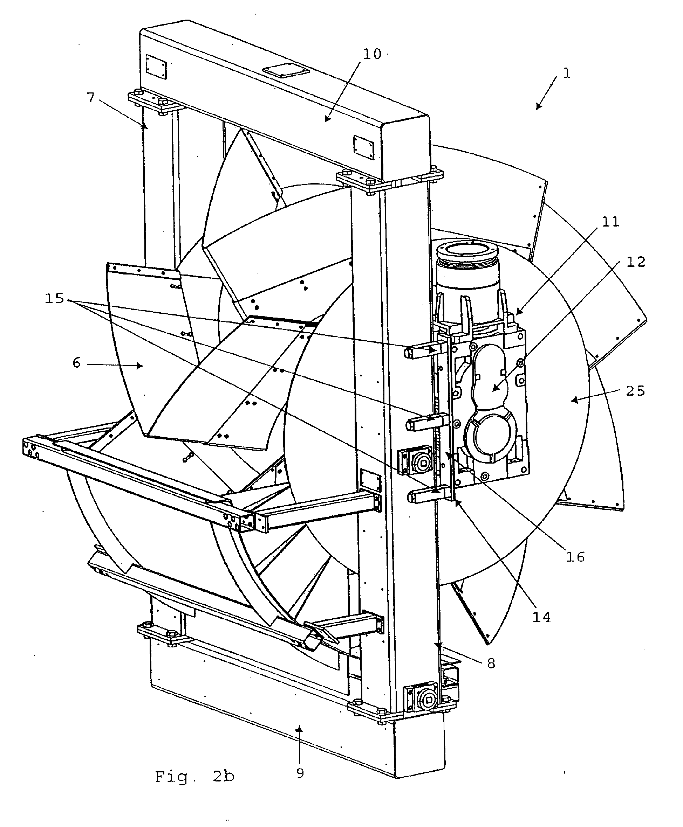

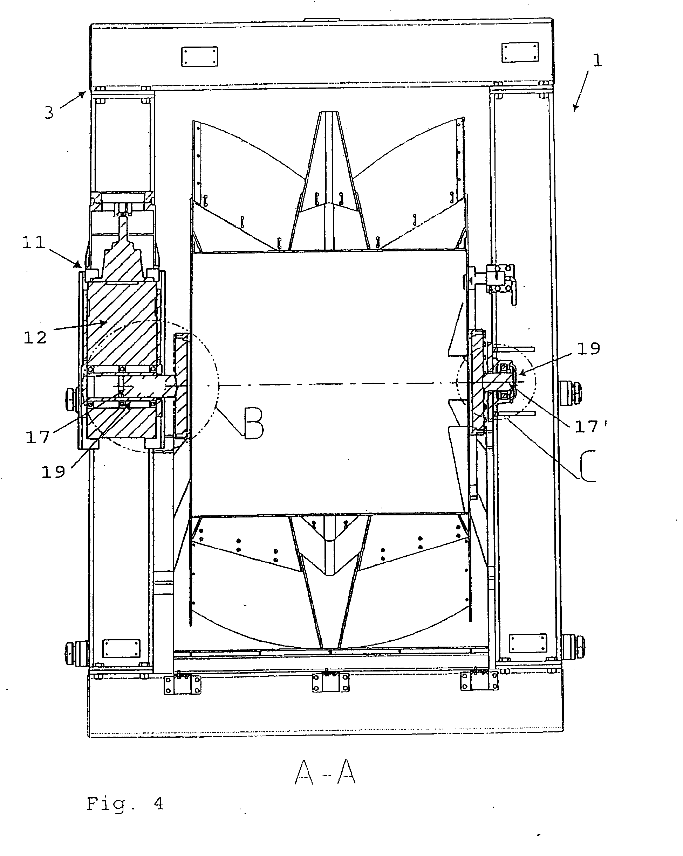

In Fig. 1 ist schaubildlich ein Laufrad 1 für eine als Staudruckmaschine ausgebildete Wasserkraftmaschine 2 veranschaulicht, wobei dieses Laufrad 1 zur Lagerung in einem Lagerrahmen 3 (Fig. 2a, 2b) gedacht ist. Das Laufrad 1 gemäß Fig. 1 weist eine zylindrische Nabe 4 auf, deren Drehachse x-x durch aus Fig. 4 bis Fig. 7 ersichtliche, stummelförmige Wellenmittel 5 gebildet wird. Die Stirnseiten der Nabe 2 begrenzen die Breite des Rotors oder Laufrads 1 und dichten das Laufrad 1 im Lagerrahmen 3 ab.

Am Umfang der Rad-Nabe 4 sind weiters geeignet geformte Schaufeln 6 angebracht, z.B. angeschweißt, um Taschen für den Wassertransport zu bilden, d.h. den Wasserdruck aufzunehmen und ein Drehmoment um die Radachse x-x zu bewirken. Die Schaufeln 6 des Laufrads 1 können außer der gezeigten V-förmigen Anordnung auch andere Anordnungen, wie beispielsweise einfache Schräganordnungen (siehe z.B. AT 404 973 B), aufweisen, und sie können auch je nach Zielsetzung eine Krümmung aufweisen.

In Fig. 2a ist eine Staudruck-Wasserkraftmaschine 2 mit einem derartigen Laufrad 1, wie in Fig. 1 gezeigt, von der Unterwasserseite her gesehen schaubildlich veranschaulicht. Das Laufrad 3 legt im Betrieb eine Wasserstandshöhe als Differenz zwischen einem stromaufwärtigen Oberwasserpegel und einem stromabwärtigen Unterwasserpegel fest; die Staudruckmaschine 1 kann quer über die Breite eines Gerinnes angeordnet werden, um das Gerinne mit der festgelegten Wasserstandshöhe aufzustauen. Beispielsweise wird - gemäß Fig. 2a - das Laufrad 1 in einem insgesamt eine rechteckige Form aufweisenden Lagerrahmen 3 gelagert, der gemäß Fig. 2a und Fig. 2b mit zwei vertikalen Trägern 7, 8 sowie einem unteren Träger 9 und einem oberen Träger 10 rund um das Laufrad 1 herum gebildet ist. Die Träger 7 bis 10 sind dabei bevorzugt aus im Querschnitt rechteckigen Formrohren gebildet.

Das Laufrad 3 ist mit einer elektrischen Motor-Generator-Maschine 11 gekuppelt. Im Generatorbetrieb wird das bremsende Drehmoment der Motor-Generator-Maschine 11 dazu genützt, die Bewegungsenergie des Laufrads 1 in elektrische Energie umzusetzen. Die Motor-Generator-Maschine 11 weist ein Getriebe 12 auf, mit dem die von den Wellenmitteln 5 gelieferte Drehzahl des Laufrads 1 in eine höhere Drehzahl für den elektrischen Generator umgewandelt wird.

Fig. 2b zeigt die Wasserkraftmaschine 2 von der Seite der Motor-Generator-Maschine 11 her gesehen. Der vertikale Träger 8 des Lagerrahmens 3 weist eine Adaptereinrichtung 14 mit am Träger 8 befestigten, insbesondere verschraubten Adapterhülsen 15 auf, welche mit einer an der Motor-Generator-Maschine 11 angebrachten Adapterleiste 16 verbunden, insbesondere verschraubt sind. Die Adaptereinrichtung 14 ermöglicht eine exakte Justierung der Motor-Generator-Maschine 11 bzw. des Getriebes 12; zudem ist die Adapterleiste 16 je nach Anwendung mit verschiedenen Getriebetypen kompatibel.

Wie aus den Fig. 4 bis 7 ersichtlich, sind die das Laufrad 1 tragenden Wellenmittel 5 durch Wellenstummel 17, 17' gebildet, welche von den Stirnseiten der Nabe 4 in axialer Richtung jeweils nach außen abstehen. Die Wellenstummel 17, 17' sind mit Befestigungsplatten 18 fix verbunden, die an den Stirnseiten der Nabe 4 fix angebracht sind. Zur rotierbaren Lagerung der Wellenstummel 17, 17' sind Lagermittel 19 vorgesehen, die beidseitig der Nabe 4 angeordnet sind. Die Lagermittel 19 werden über die Adaptereinrichtung 14 vom vertikalen Träger 8 bzw. über eine auskragende Konsole 13 vom vertikalen Träger 7 des Lagerrahmens 3 getragen. Der Wellenstummel 17 dient zur Drehmomentübertragung vom Laufrad 1 auf das Getriebe 12, welches die vom Wellenstummel 17 gelieferte Drehzahl in eine für den Betrieb der Motor-Generator-Maschine 11 zweckmäßige Drehzahl übersetzt. Zu diesem Zweck weist das Getriebe 12 nicht näher dargestellte Übersetzungsmittel auf, welche beispielsweise durch zusammenarbeitende Zahnräder gebildet sein können.

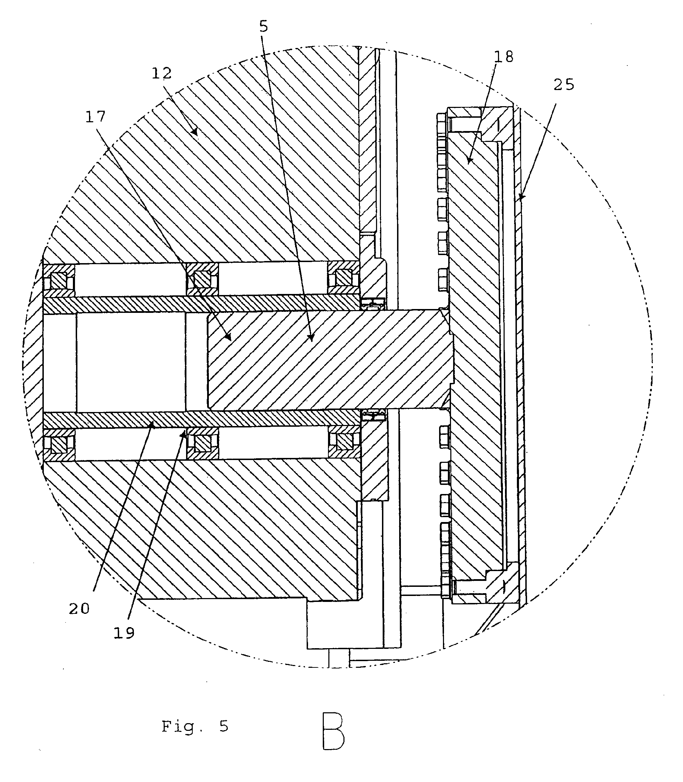

Wie im Detail aus Fig. 5 ersichtlich, ist das den getriebeseitigen Wellenstummel 17 lagernde Lagermittel 19 durch eine im Getriebe 12 angeordnete Hohlwelle 20 gebildet, welche über eine form-, reib-, oder kraftschlüssige Verbindung drehfest mit dem Wellenstummel 17 verbunden ist. Demnach ist das zur Lagerung des Wellenstummels 17 vorgesehene Lagermittel 19 in das Getriebe 12 bzw. in die Motor-Generator-Maschine 11 integriert; die Motor-Generator-Maschine 11 fungiert somit gleichzeitig als Antriebs-und Lagereinheit. Vorteilhafterweise kann demgemäß ein gesondertes Lager für den getriebeseitigen Wellenstummel 17 eingespart werden.

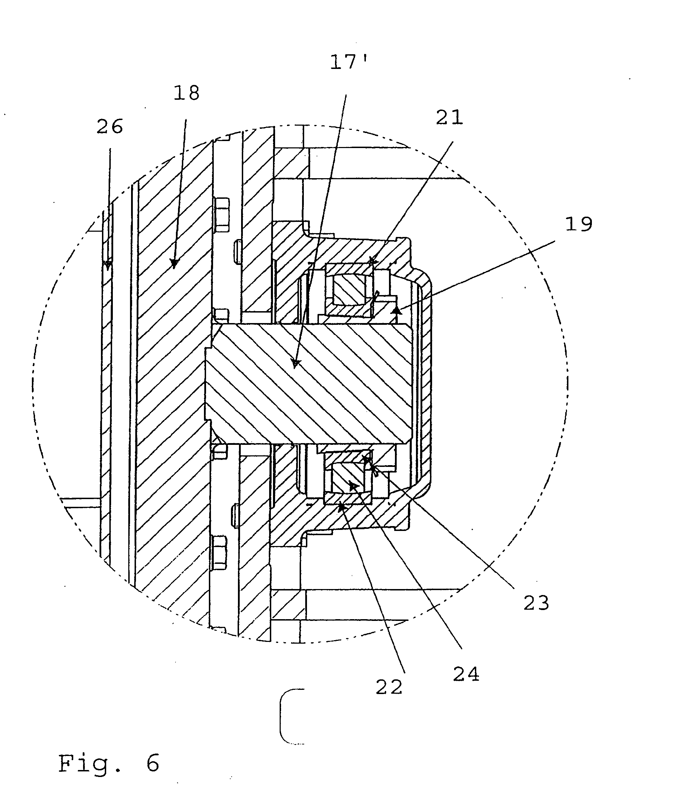

Wie aus Fig. 6 ersichtlich, sind die Lagermittel 19 an der dem Getriebe 13 gegenüberliegenden Stirnseite der Nabe 4 als Pendellager 21 ausgebildet, welches eine Schiefstellung des darin gelagerten Wellenstummels 17' erlaubt. Das Pendellager 21 weist in an sich bekannter Weise einen Außenring 22 und einen Innenring 23 auf, zwischen welchen ein Wälzkörper 24 drehbar gelagert ist.

Die an gegenüberliegenden Stirnseiten der Nabe 4 angebrachten Lagermittel 19 ermöglichen eine stabile Halterung des Laufrads 1, weisen jedoch gegenüber einem einseitig gelagerten, frei auskragenden Laufrad 1 den Nachteil einer statischen Überbestimmung auf. Die drehfest mit der Nabe 4 verbundenen Wellenmittel 5 sind im Betrieb ständig in Richtung der Drehachse bzw. quer dazu wirkende Kräften ausgesetzt, welche in den Lagermitteln 19 Zwangskräfte hervorrufen. Bei einer Überlastung drohen Schäden an den Lagermitteln 19 bzw. den damit verbundenen Komponenten, die eine Wartung bzw. Reparatur der Anlage erforderlich machen können; zumindest wäre im Dauereinsatz ein erheblicher Verschleiss zu verzeichnen. Um diese nachteiligen Auswirkungen zu vermeiden, sollen die im Betrieb auf die Lagermittel 19 einwirkenden Zwangskräfte minimiert werden.

Dies wird einerseits dadurch erreicht, dass das Pendellager 21 die entstehenden Zwangskräfte durch eine entsprechende Schrägstellung des Wellenstummels 17' ausgleichen kann. Andererseits weist die in das Getriebe 12 integrierte Hohlwelle 20, welche den Wellenstummel 17 lagert, eine hohe Biegesteifigkeit auf, die Zwangskräften nicht durch eine Verformung nachgeben kann. Um auch die im getriebeseitigen Lagermittel 19, d.h. der Hohlwelle 20 des Getriebes 12, entstehenden Zwangskräfte weitestgehend ausgleichen zu können, ist die mit dem zur Drehmomentübertragung auf das Getriebe 12 vorgesehenen Wellenstummel 17 verbundene Stirnseite der Nabe 4 durch eine elastisch verformbare Seitenwand 25 gebildet.

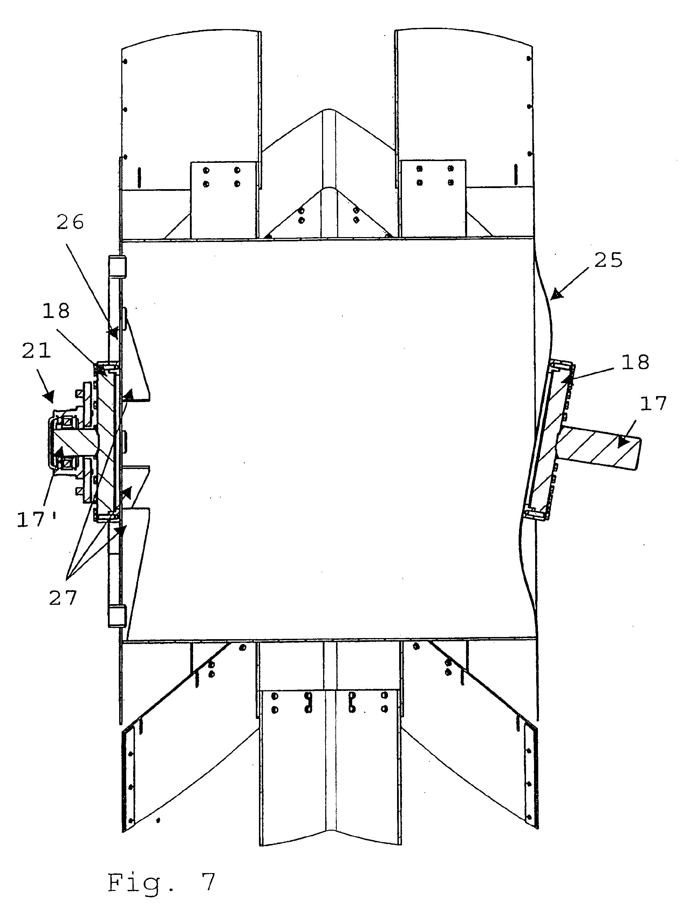

In Fig. 7 ist schematisch veranschaulicht, wie die elastische Seitenwand 25 der Nabe 4 im Betrieb quer zu ihrer Längserstreckungsebene membranartig verbogen wird, um einen Winkelversatz des Wellenelements 17, d.h. eine "taumelnde" Bewegung des Laufrads, zu ermöglichen, welcher bzw. welche die in der Hohlwelle 20 auftretenden Zwangskräfte weitestgehend eliminiert. Die Durchbiegung der verformbaren Seitenwand 25 ist in Fig. 7 übertrieben dargestellt. Im Betrieb ist zum Ausgleich der Querkräfte auf den Wellenstummel 17 eine vergleichsweise geringe Verformung der Seitenwand 25 ausreichend. Für den Ausgleich von Zwangskräften ist eine möglichst geringe Biegesteifigkeit der Seitenwand 25 von Vorteil, welche jedoch andererseits den im Betrieb auftretenden Kräfte auf Dauer standhalten muss. Zur Ausbildung der elastisch verformbaren Seitenwand 25 wird bevorzugt ein Metallblech, vorzugsweise ein Stahlblech, z.B. aus Baustahl, insbesondere mit einer Stärke von ungefähr 8 mm, verwendet.

Wie aus Fig. 7 weiters ersichtlich, kann die der verformbaren Seitenwand 25 gegenüberliegende Stirnseite der Nabe 4 durch eine im Betrieb im Wesentlichen starr angeordnete Seitenwand 26 gebildet sein; der Ausgleich der Zwangskräfte wird hier über die Schrägstellung des Wellenelements 17' im Pendellager 21 erreicht. Zur Erhöhung der Biegesteifigkeit ist die starre Seitenwand 26 mit Versteifungswinkeln 27 verbunden.

## Patentansprüche

1. Wasserkraftmaschine (2) mit einem Laufrad (1), das eine mit Schaufeln (6) verbundene Nabe (4) aufweist, die von die Drehachse des Laufrads (1) bildenden, von gegenüberliegenden Stirnseiten der Nabe (4) abstehenden Wellenmitteln (5) getragen wird, und mit einer elektrischen Motor-Generator-Maschine (11), die über ein Getriebe (12) mit den Wellenmitteln (5) kuppelbar ist, **dadurch gekennzeichnet, dass** eine Stirnseite der Nabe (4) durch eine verformbare Seitenwand (25) gebildet ist und die der verformbaren Seitenwand (25) gegenüberliegende Stirnseite der Nabe (4) durch eine im Betrieb im Wesentlichen starr angeordnete Seitenwand (26) gebildet ist.

2. Wasserkraftmaschine (2) nach Anspruch 1, **dadurch gekennzeichnet, dass** die verformbare Seitenwand (25) mit einem zur Drehmomenübertragung auf das Getriebe (12) vorgesehenen Wellenstummel (17) verbunden ist, der in einem biegesteifen Getriebeelement, insbesondere einer Hohlwelle (20) des Getriebes (12), gelagert ist.

3. Wasserkraftmaschine (2) nach Anspruch 1 oder 2, **dadurch gekennzeichnet, dass** ein mit der starren Seitenwand (26) verbundener Wellenstummel (17') in einem Pendellager gelagert ist.

4. Wasserkraftmaschine (2) nach einem der Ansprüche 1 bis 3, **dadurch gekennzeichnet, dass** die starre Seitenwand (26) mit Versteifungselementen, insbesondere Versteifungswinkeln (27), verbunden ist.

5. Wasserkraftmaschine (2) nach einem der Ansprüche 1 bis 4, **dadurch gekennzeichnet, dass** die verformbare Seitenwand (25) durch ein Metallblech, insbesondere ein Stahlblech, gebildet ist, das vorzugsweise eine Stärke von zwischen 2 mm und 15 mm aufweist.

6. Wasserkraftmaschine (2) nach einem der Ansprüche 2 bis 5, **dadurch gekennzeichnet, dass** an den Seitenwänden (25, 26) vergleichsweise kleine Befestigungsplatten (18) angebracht sind, die mit dem jeweiligen Wellenstummel (17, 17') verbunden sind.

7. Wasserkraftmaschine (2) nach einem der Ansprüche 1 bis 6, **dadurch gekennzeichnet, dass** das Getriebe (12) mittels einer Adaptereinrichtung (14) an einem das Laufrad (1) umfassenden Lagerrahmen (3) befestigt ist.

8. Wasserkraftmaschine (2) nach einem der Ansprüche 1 bis 7, **dadurch gekennzeichnet, dass** zur Ausbildung einer Staudruckmaschine das Laufrad (1) im Betrieb eine Wasserstandshöhe als Differenz zwischen einem Oberwasserpegel und einem Unterwasserpegel festlegt.

## Claims

1. A water power machine (2) with a blade wheel (1) comprising a hub (4) connected with blades (6) which is supported by shaft means (5) forming the axis of rotation of the blade wheel (1) and projecting from opposing front faces of the hub (4), and with an electric motor generator machine (11) adapted to be coupled to the shaft means (5) via a gear mechanism (12), **characterized in that** one front face of the hub (4) is formed by a deformable side wall (26) and the front face of the hub (4) which is opposing the deformable side wall (25) is formed by a side wall (26) arranged to be substantially rigid in operation.

2. The water power machine (2) according to claim 1, **characterized in that** the deformable side wall (25) is connected with a shaft journal (17) provided for torque transmission to the gear mechanism (12), said shaft journal (17) being mounted in a gear mechanism element of flexural rigidity, in particular a hollow shaft (20) of the gear mechanism (12).

3. The water power machine (2) according to claims 1 or 2, **characterized in that** a shaft journal (17') connected with the rigid side wall (26) is mounted in a self-aligning bearing.

4. The water power machine (2) according to any of claims 1 to 3,
**characterized**
**in that** the rigid side wall (26) is connected with stiffening elements, in particular stiffening brackets (27).

5. The water power machine (2) according to any of claims 1 to 4, **characterized in that** the deformable side wall (25) is formed by a sheet metal, in particular a steel sheet, preferably having a thickness of between 2 mm and 15 mm.

6. The water power machine (2) according to any of claims 2 to 5, **characterized in that** comparatively small fastening plates (18) connected with the respective shaft journal (17, 17') are arranged at the side walls (25, 26).

7. The water power machine (2) according to any of claims 1 to 6, **characterized in that** the gear mechanism (12) is fastened by an adapter means (14) to a bearing frame (3) comprising the blade wheel (1).

8. The water power machine (2) according to any of claims 1 to 7, **characterized in that**, for forming a storage water pressure machine, the blade wheel (1) determines in operation a water level height as a difference between a headwater level and a tailwater level.

## Revendications

1. Machine hydraulique (2) comportant une roue mobile (1) qui présente un moyeu (4) relié à des ailettes (6) qui est supporté par des moyens d'arbre (5) écartés de côtés frontaux opposés au moyeu (4) formant l'axe de rotation de la roue mobile (1) et comportant un groupe convertisseur électrique (11) qui peut être couplé avec les moyens d'arbre (5) par le biais d'une transmission (12), **caractérisé en ce qu'**un côté frontal du moyeu (4) est formé par une paroi latérale déformable (25) et le côté frontal du moyeu (4) opposé à la paroi latérale déformable (25) est formé par une paroi latérale (26) disposée de manière essentiellement rigide pendant l'utilisation.

2. Machine hydraulique (2) selon la revendication 1, **caractérisé en ce que** la paroi latérale déformable (25) est reliée à un bout d'arbre (17) prévu pour le transfert du couple à la transmission (12), qui est monté dans un élément de transmission résistant à la flexion, en particulier un arbre creux (20), de la transmission (12).

3. Machine hydraulique (2) selon la revendication 1 ou 2, **caractérisé en ce qu'**un bout d'arbre (17') relié à la paroi latérale rigide (26) est monté dans un roulement articulé.

4. Machine hydraulique (2) selon l'une quelconque des revendications 1 à 3, **caractérisé en ce que** la paroi latérale rigide (26) est reliée à des éléments de renforcement, en particulier des équerres de renforcement (27).

5. Machine hydraulique (2) selon l'une quelconque des revendications 1 à 4, **caractérisé en ce que** la paroi latérale déformable (25) est formée par une tôle métallique, en particulier une tôle d'acier, qui présente de préférence une épaisseur comprise entre 2 mm et 15 mm.

6. Machine hydraulique (2) selon l'une quelconque des revendications 2 à 5, **caractérisé en ce que** des plaques de fixation comparativement petites (18), qui sont reliées au bout d'arbre respectif (17, 17'), sont attachées aux parois latérales (25, 26).

7. Machine hydraulique (2) selon l'une quelconque des revendications 1 à 6, **caractérisé en ce que** la transmission (12) est fixée sur un cadre de support (3) entourant la roue mobile (1) au moyen d'un dispositif adaptateur (14).

8. Machine hydraulique (2) selon l'une quelconque des revendications 1 à 7, **caractérisé en ce qu'**afin de former un moteur à pression dynamique, la roue mobile (1) détermine, pendant l'utilisation, une hauteur de niveau d'eau comme différence entre un niveau d'eau en amont et un niveau en eau d'aval.
